(19) Europäisches Patentamt / European Patent Office / Office européen des brevets

(11) **EP 1 619 103 B1**

(12) **EUROPEAN PATENT SPECIFICATION**

(45) Date of publication and mention
of the grant of the patent:
**05.09.2007   Bulletin 2007/36**

(51) Int Cl.:
***B61L 3/24*** *(2006.01)*          ***H04B 1/12*** *(2006.01)*

(21) Application number: **05106617.3**

(22) Date of filing: **19.07.2005**

(54) **System and method for detecting and decoding signals for automatic train control**

Anlage und Verfahren zum Detektieren und Dekodieren von Signalen für automatische Steuereinrichtung von Zügen

Système et procédé pour détecter et décoder des signaux pour commande automatique de trains

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.07.2004   NL 1026696**

(43) Date of publication of application:
**25.01.2006   Bulletin 2006/04**

(73) Proprietor: **Nedtrain Consulting B.V.**
**3511 CE  Utrecht (NL)**

(72) Inventor: **WELVAARTS, Johannes Anthonius Arnoldus**
**5613  DC, Eindhoven (NL)**

(74) Representative: **van Westenbrugge, Andries et al**
**Nederlandsch Octrooibureau**
**Postbus 29720**
**2502 LS Den Haag (NL)**

(56) References cited:
**EP-A- 0 750 402          EP-A- 0 779 196**
**DE-A1- 3 325 249          US-A- 4 081 160**
**US-A- 5 586 736          US-B1- 6 647 053**

**Description**

The present invention relates to a system and a method for detection of electromagnetic signals according to the precharacterising clause of Claim 1.

In particular the present invention relates to detection of signals for automatic train control (ATC). In addition the present invention relates to a processing unit for use in the detection system and to a computer program product for use in the detection system.

Automatic train control (ATC) is used in railway networks to enable the speed of a train in that network to be influenced.

To this end an ATC signal is communicated to the train within a track section , that is to say part of the railway network. The ATC signal comprises an amplitude-modulated alternating current that transmits the maximum travelling speed in code to a train on the track section .

The ATC signal is transmitted to the train via the rails.

The ATC signal is generated by a signal generator that is connected to the two (left-hand and right-hand) rails of the track section. With this arrangement the ATC signal cycles in the rails as a code stream, that is to say the current direction of the ATC signal in the right-hand rail is opposite to the current direction of the ATC signal in the left-hand rail. With this arrangement the current circuit is formed by the two rails and the transverse link between them via axles of the train set.

The train on the track section is equipped with detection means by means of which the ATC signal from the rails can be determined without contact. With this arrangement the detection means make use of the magnetic field that is generated by the ATC signal. The maximum travelling speed can be derived (after decoding) from the detection signal, which is proportional to the current through the rails.

One example of the use of this ATC system is the Dutch railway network. Incidentally, the ATC system installed on the Dutch railway network is not unique. Comparable systems are used throughout the world.

The ATC system of the prior art is subject to adverse influences.

Apart from the code stream, interference currents, such as a traction return current and stray or interference currents from other track section s or ATC sections, cycle through the rails.

The traction return current is the current that is passed on by a train to the rails, where the rail serves as return conductor for the current supply that is fed to the electric motors of the train via a power supply line (usually a catenary).

Traction return current and stray currents can either be distributed over the two rails or pass though one rail.

Because these interference currents can also contain frequency components in the vicinity of the carrier wave frequency, derivation of the maximum speed from the currents measured by the ATC detection means is made more difficult.

EP 0 750 402 discloses a method and device for the recognition of and the filtering-out of a signal that comprises sine-shaped interference. In this case the frequency of the interference signal is determined, the half-spectrum in which the interference signal is located is filtered out and the main frequency peak is determined depending on the frequency of the interference signal and the presence or absence of inversion in the interference signal.

US 5 586 736 discloses an instrument for the detection in a rail vehicle of coded electromagnetic signals from rails in an environment with high noise, wherein a pick-up coil is positioned by each rail for picking up the signal from the rail. This high noise is caused by the magnetic field of the alternating current motor(s) of the rail vehicle that is intercepted by the pick-up coils. The pick-up coils are subdivided into two sub-coils with a construction and orientation such that account can be taken of the directions of the electromagnetic noise and the electromagnetic signal from the rails, where the noise signal picked up by one sub-coil is subtracted from the noise signal picked up by the other sub-coil of the same pick-up coil and the signal picked up from the one rail by the one sub-coil is added to the signal that is picked up from the same rail by the other sub-coil of the same pick-up coil.

The aim of the method according to the present invention described above is to minimise the interference effect of traction return current and stray current.

This aim is achieved by an ATC detection system according to the precharacterising clause of Claim 1, characterised in that the filter member comprises a noise-determining member that is equipped to:

- pick up a first measured signal from the first rail and a second measured signal from the second rail;
- determine a first complex noise level value in the first measured signal and a second complex noise level value in the second measured signal;
- on the basis of the first and second complex noise level values, determine a measured signal with least interference from the first and second measured signals.

What is advantageously achieved by determining the noise in both rails and from this determining from which rail the ATC signal with least interference can be determined is that the measured ATC signal can be adequately differentiated from signals that are related to the interference currents in the rails.

Furthermore, the present invention relates to an ATC detection system characterised in that the noise-determining member is furthermore equipped to establish a weighted average noise level value for the first and second complex noise level values with associated weighting factor and to determine a weighted average of the first measured signal and the second measured signal as the measured signal with least interference for a minimum value of the weighted average noise level value.

By this means the possibility of deriving the speed information from an averaged ATC signal is advantageously obtained. As a result of averaging, the averaged ATC signal has relatively less interference than the individual ATC signals that are measured in the right-hand and left-hand rail, respectively.

As a result of the dynamic averaging where the weighting factor between the ATC signal in the right-hand and in the left-hand rail is regarded as variable, the weighting factor can be set such that an ATC signal that is optimum to a substantial extent is obtained for further processing.

The present invention also relates to a method for ATC signal detection, characterised by the noise determination step, which comprises:

- picking up a first measured signal from the first rail and a second measured signal from the second rail;
- determining a first complex noise level value in the first measured signal and a second complex noise level value in the second measured signal;
- on the basis of the first and second complex noise level values, determining a measured signal with least interference from the first and second measured signals.

The present invention also relates to a computer system for ATC detection according to the precharacterising clause of Claim 13, characterised in that the processing unit is able to perform a noise determination step, the noise determination step comprising:

- picking up a first measured signal from the first rail and a second measured signal from the second rail;
- determining a first complex noise level value in the first measured signal and a second complex noise level value in the second measured signal;
- on the basis of the first and second complex noise level values, determining a measured signal with least interference from the first and second measured signals.

Finally, the present invention relates to a computer program product according to the precharacterising clause of Claim 14, characterised in that, after it has been loaded, the computer program product enables the processing unit to perform a noise determination step, the noise determination step comprising:

- picking up a first measured signal from the first rail and a second measured signal from the second rail;
- determining a first complex noise level value in the first measured signal and a second complex noise level value in the second measured signal;
- on the basis of the first and second complex noise level values, determining a measured signal with least interference from the first and second measured signals.

The invention will be explained in more detail below with reference to a few drawings in which illustrative embodiments thereof are shown. They are intended solely as illustration of the objectives of the invention and not to restrict the inventive concept, which is defined by the appended claims.

In the drawings:

Figure 1 shows a perspective view of a track section provided with an ATC detection system;
Figure 2 shows a block diagram of a detector for interference currents;
Figure 3 shows a block diagram of an ATC detection system according to the present invention;
Figure 4 shows, diagrammatically, a processing unit for use in the ATC detection system according to the present invention, and
Figure 5 shows a block diagram for a method for use in the ATC detection system according to the present invention.

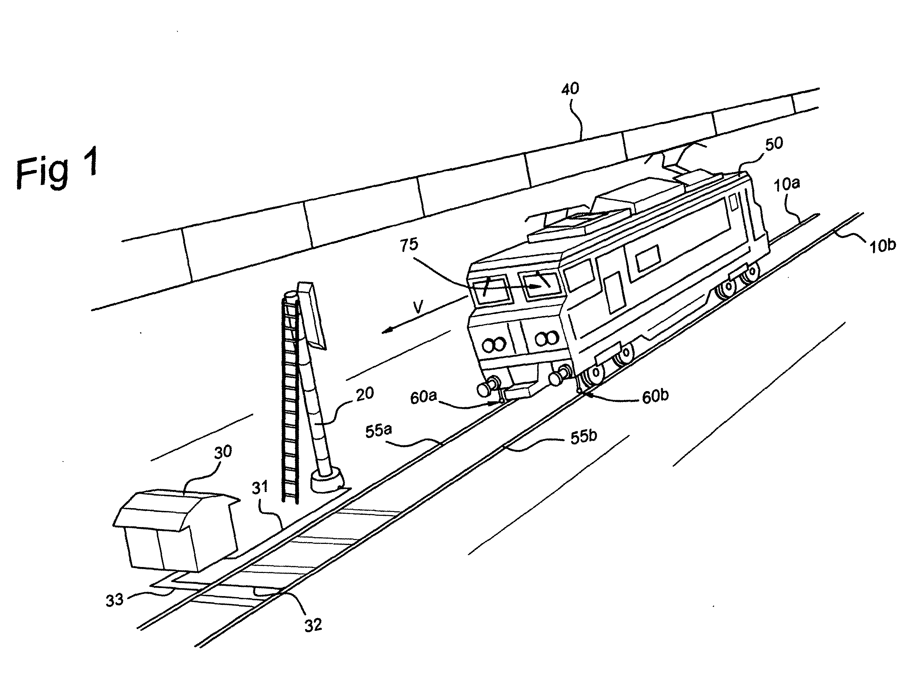

Figure 1 shows a perspective view of a track section provided with an ATC detection system. On a track section there is a track consisting of a right-hand rail 10a and a left-hand rail 10b.

A train 50 which moves in the direction as indicated by the arrow v is on the track. The train 50 is provided with electrical power via a supply line 40. In this case the supply line 40 is a catenary.

A signal 20 and an ATC system 30 are erected along the track.

The ATC system 30 is connected to the signal 20 via link 31 and also via link 32 to the right-hand rail 10a and via link 33 to the left-hand rail 10b.

The ATC system is equipped to receive signals from the signal 20 and to generate ATC signals (optionally) depending thereon. The ATC signals 55a, 55b are amplitude-modulated alternating current signals that are fed to the right-hand and left-hand rails 10a, 10b via their respective links 32 and 33.

The ATC signals 55a, 55b, which are also referred to as code stream, comprise a carrier wave signal with a base frequency F, on which a code signal C is modulated that corresponds to an ATC code (ATCcode) for the maximum travelling speed of the train 50.

In the Dutch situation a carrier wave frequency F of 75 Hz is used; in other situations a different frequency F can also be used.

The train 50 is provided with an ATC detection system 75 that by means of pick-up coils 60a and 60b, one (60a) positioned in the vicinity of the right-hand rail 10 and another (60b) positioned in the vicinity of the left-hand rail 10b, is able to detect the ATC signals 55a and 55b as measured ATC signals 56a and 56b.

Since the train is also able to move in the opposite direction, there are identical pick-up coils (not shown here but indicated by reference numerals 61a and 61b below) at the other end of the train 50 which are able to pick up the ATC signals from the right-hand and left-hand rail, respectively, in the opposite direction of travel.

However, a traction return current is passed on by the train 50 to the rails as output from the current supply from the supply line 40. Stray currents can also infiltrate the rails from other track section s or ATC sections. In this way the measured ATC signal 56a, 56b will be disturbed by the presence of traction return current and/or stray currents in the rails 10a, 10b.

Because these interference currents (traction return current and stray currents) can also contain frequency components in the vicinity of the carrier wave frequency F, the derivation of the maximum speed from the currents measured by the ATC detection system is made more difficult.

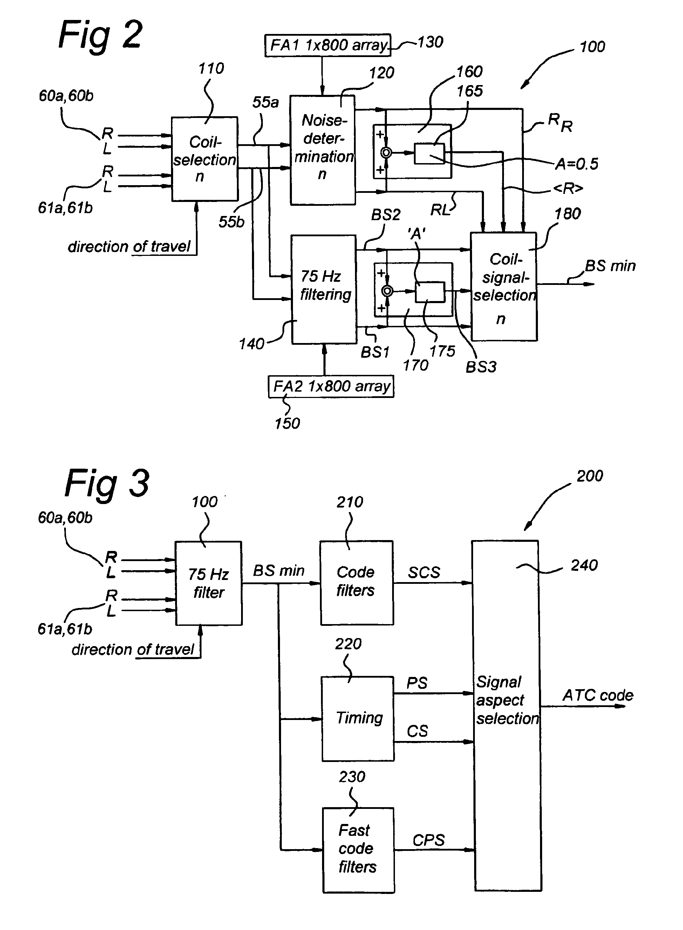

Figure 2 shows a block diagram of a detector for interference currents for use in an ATC detection system.

The noise current detector 100 comprises a coil selection member 110, a noise-determining member 120, a carrier wave filter member 140, a first averaging member 160, a second averaging member 170 and a coil signal selection member 180.

In this case coil selection member 110 is connected to the left-hand pick-up coil 60b and right-hand pick-up coil 60a at the one end of the train 50 and the left-hand pick-up coil 61a and right-hand pick-up coil 61b at the other end for picking up left and right ATC signals 55b, 55a from the left-hand and right-hand rails 10b, 10a, respectively, as measured ATC signals 56b and 56a, respectively.

An output of coil selection member 110 is connected to an input of noise-determining member 120 and to an input of carrier wave filter member 140 for transmitting the left and right measured ATC signals 56b, 56a.

An output of noise-determining member 120 is connected to a first input of the coil signal selection member 180. Noise-determining member 120 is also connected to the first averaging member 160. First averaging member 160 is likewise connected via an output to the first input of the coil signal selection member 180.

Furthermore, a first filter array 130 is linked to an input of noise-determining member 120.

An output of carrier wave filter member 140 is connected to a second input of the coil signal selection member 180. Carrier wave filter member 140 is also connected to the second averaging member 170. Second averaging member 170 is also connected via an output to the second input of the coil signal selection member 180. Furthermore, a second filter array 150 is linked to an input of carrier wave filter member 140.

The noise current detector 100 functions as follows:

Depending on the direction of travel v, measurement of the right and left ATC signals 55a, 55b is selected by coil selection member 110 at the front of the train 50 that is functional at that point in time.

The selected right and left ATC signals 55a, 55b are measured by their respective pick-up coil and fed as measured ATC signals 56a, 56b to the noise-determining member 120.

In order to determine which of the measured signals is the least disturbed, the noise level in the frequency band that does not contain the carrier wave frequency and in which the most disturbance by traction return currents is expected is determined by noise-determining member 120 for each of the left and right measured ATC signals 56b, 56a. These are complex values RL and RR for the left and right measured ATC signal 56b, 56a, respectively.

The frequency band that does not contain the carrier wave frequency F and in which the most disturbance by traction return currents is expected can be determined in advance. The characteristics thereof are stored in first filter array 130. The characteristics are preferably represented in the form of complex values.

The filter array 130 can be an arbitrary suitable memory for this purpose. For instance, in the Dutch situation it is known, for example, that traction return current in the 300 Hz and 600 Hz range can generate substantial noise, originating from mainly the 6-pulse and 12-pulse rectifiers in the power sub-stations and possibly also from the electric drive units of trains. Consequently, such a noise characteristic can thus be incorporated in the first filter array. It will be clear to a person skilled in the art that noise determination in the frequency range of the carrier wave F will have little point.

The complex values RL and RR are then fed to the first averaging member 160. There the weighted average of the right and left measured ATC signals 56a, 56b that yields the lowest noise level related to the residual ATC signal is sought. For this purpose weighting factors A and B (where B = 1-A if $0 \leq A \leq 1$) are used to determine a weighted average <R> of the noise in accordance with:

$$<R> = |A \cdot RL + B \cdot RR|/(A+B)$$

Note that because of the fact that RR and RL are complex values with a real and imaginary part and that these complex values are summed with weighting, <R> can, as a result, have a smaller modulus value than the individual noise levels RR and RL for the right and left measured ATC signal 56a, 56b. If $0 \leq A \leq 1$ and B = 1-A, the minimum value for <R> can be found within this range, in other words <R> can have a minimum value varying from RR for A = 0 to RL for A = 1 or another value for $0 \leq A \leq 1$. The value of A (and B) at which the weighted average <R> will be minimum can be calculated in a manner that is known to those skilled in the art.

An example where a weighting factor A = 0.5 is found in block 165 is shown in Figure 2.

The right and left measured ATC signals 56a, 56b are also fed to the carrier wave filter member 140.

In carrier wave filter member 140 the magnitude of the spectral component with the carrier wave frequency F is determined from the right and left measured ATC signals 56a, 56b. The result is a first and second square-wave signal BS1, BS2, the frequency of which is the measure for the maximum speed in both cases. The first square-wave signal BS1 is related to the left measured ATC signal 56b and the second square-wave signal BS2 is related to the right measured ATC signal 56a.

To produce the square-wave signals BS1, BS2 use is made of data that are stored in the second filter array 150 in the form of frequency filter characteristics. The second filter array 150 can be an arbitrary suitable memory for this purpose. The frequency filter characteristics of the second filter array 150 are preferably represented in the form of complex values.

The first and second square-wave signal BS1, BS2 are fed from carrier wave filter member 140 to coil selection member 180.

The first and second square-wave signal BS1, BS2 are also fed to second averaging member 170, which can sum and average the square-wave signals BS1 and BS2 which have complex values, use being made of the weighting factor A that has been determined with the aid of noise-determining member 120. The value of A, stored in block 165, is used in block 175 of the second averaging member 170 to produce a weighted average square-wave signal BS3, where

$$BS3 = |A \cdot BS2 + B \cdot BS1| / (A+B)$$

The weighting factor value A at which the weighted ATC signal exhibits the least noise outside the carrier wave frequency range, designated as a minimum weighted ATC signal, is then determined in the coil selection member 180 on the basis of the noise values RR, RL and <R>.

The minimum weighted ATC signal in the form of the square-wave signal BS3 can thus have a value in the range of BS2 associated with the left measured ATC signal 56b for A = 1 to BS1 associated with the right measured ATC signal 55a for A = 0 or a weighted average value for an intermediate value of A, for $0 \le A \le 1$.

The coil selection member 180 will now select the square-wave signal BS3, with a value between BS1 and BS2 as limits (depending on the choice made on the basis of the lowest of the noise values RR, RL and <R> determined by the weighting factor value A) as the square-wave signal BSmin with least interference and will further transmit this signal BSmin for further analysis of said respective square-wave signal. The analysis will be explained in more detail below.

By establishing the weighting factor at which the influence of traction return currents (and other interfering currents) in a frequency range that does not contain the carrier wave frequency is minimised, according to the invention the interference at the carrier wave frequency becomes minimal by averaging the measured signals with the aid of said weighting factor to give a measured signal with minimum interference.

In this way the square-wave signal BS3 which has the minimum interference is selected for further analysis in coil selection member 180. What is advantageously achieved in this way is that the further decoding in, for example, an ATC detection system is consequently simpler and most robust.

Figure 3 shows a block diagram of an ATC detection system 200 according to the present invention.

ATC detection system 200 comprises a noise current detector 100, code filters member 210, timing member 220, fast code filters member 230 and a signal aspect selection member 240.

As explained with reference to Figure 2, noise current detector 100 receives left and right measured ATC signals 56a, 56b from the front of the train 50 that is functional at that point in time. The output of noise current detector 100 is connected in parallel to an input of code filters member 210, timing member 220 and fast code filters member 230, respectively. The output of noise current detector 100 supplies the measured ATC signal with least interference from the weighted average for the noise level measurement values in the form of the respective square-wave signal BS1, BS2 or BS3. Once again this is dependent on the weighting factor value A for which the minimum noise level <R> is established.

An output of code filters member 210 is connected to a first input of a signal aspect selection member 240.

An output of fast code filters member 230 is connected to a second input of signal aspect selection member 240.

An output of timing member 220 is connected to a third and a fourth input of signal aspect selection member 240.

Code filters member 210 and fast code filters member 230 determine the magnitude of the spectral components at the various possible code frequencies determine from the abovementioned selected square-wave signal BSmin with least interference.

Fast code filters member 230 does this over a period that is too short to differentiate the frequencies. The result is then used only to establish whether or not code is present. This code presence signal CPS is fed to the second input of signal aspect selection member 240.

Code filters member 210 determines which spectral component of the selected square-wave signal BSmin with least interference is the greatest. The result thereof, a spectral component signal SCS, is fed to the first input of signal aspect selection member 240.

Timing member 220 measures the period of the square wave and from this determines what is the most probable code signal that the selected square-wave signal BSmin with least interference contains. As the result a period signal PS is fed to the third input of the signal aspect selection member 240 and a code signal CS for the most probable code is fed to the fourth input of the signal aspect selection member 240.

On the basis of the collected information, that is to say signals CPS, SCS, PS and CS, signal aspect selection member 240 establishes the coded maximum speed as incorporated as code signal C in the left and right measured ATC signal 56a, 56b. Incidentally, it is possible that the collected information contains fewer data and that, for example, CPS and/or PS is dispensed with because this signal/these signals can also be implied by SCS and/or CS.

The coded maximum speed can now be fed to, for example, indicators that indicate to the train driver what the maximum desired speed C is according to the ATC system. The coded maximum speed signal C can also be fed to the system that directly influences the speed of the train 50. The possibilities for this are known to those skilled in the art.

The current detector and ATC detection system shown in Figure 2 and Figure 3 can be constructed in various forms. In particular, the signal detection and signal processing in the various members can be carried out either in hardware or in software. In hardware embodiments both microprocessors and digital signal processors can be used.

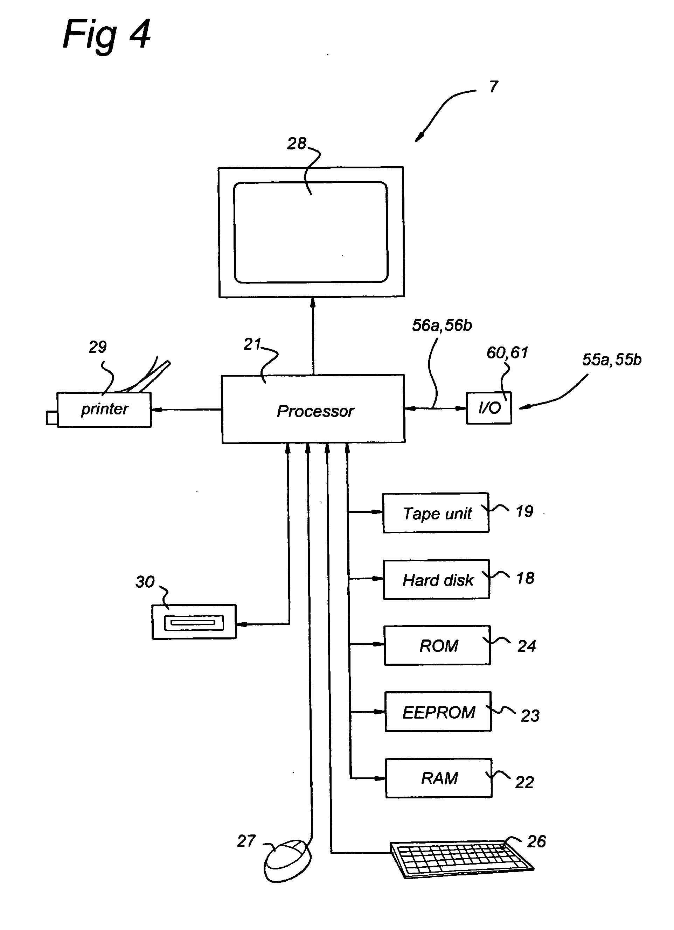

Figure 4 shows, diagrammatically, a processing unit for use in the ATC detection system according to the present invention.

A central processing unit 21 is connected to memory means 18, 19, 22, 23, 24 that store instructions and data, one or more readers 30 (to read, for example floppy disks, CD-ROMs and DVDs, memory cards, etc.), a keyboard 26 and a mouse 27 as input devices, and, as output devices, a monitor 28 and a printer 29. Both other input units, such as a trackball, a barcode reader, a scanner and a touch screen, as well as other output devices can be provided.

The central processing unit 21 is furthermore provided with a link to pick-up coils 60, 61 at the front and rear of the train set 50 for reading in left and right ATC signals 55ab, 55b.

The central processing unit 21 is also provided with means to enable time signals to be generated and determined.

The memory means shown in Figure 4 comprise RAM 22, (E)EPROM 23, ROM 24, tape unit 19 and hard disk 18. However, more and/or other memory units can be provided, as will be clear to a person skilled in the art. Moreover, if necessary, one or more of these units can be located remotely from the central processing unit 21.

The central processing unit 21 is shown as a single unit, but can also comprise various processing units that operate in parallel or are controlled by one central unit, it being possible for the processing units to be located remotely from one another, as will be known to those skilled in the art.

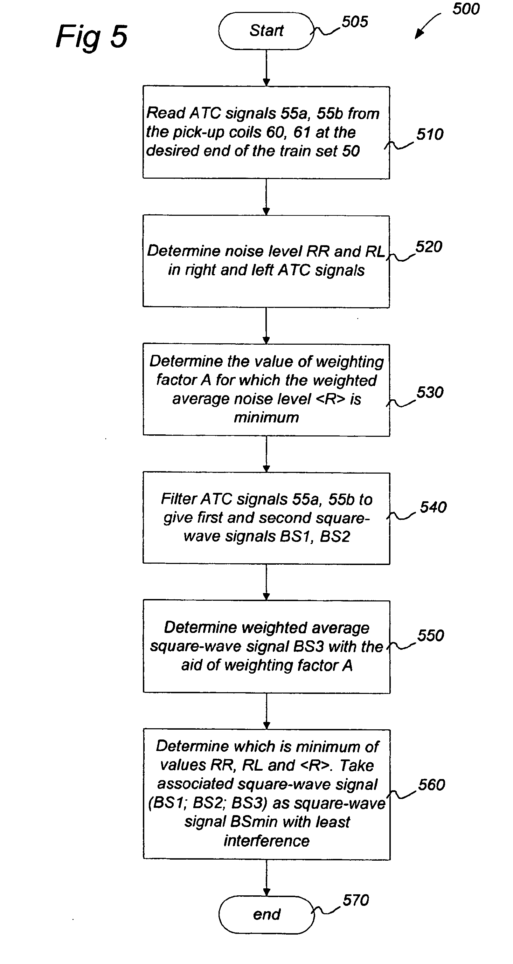

Figure 5 shows a block diagram for a method for a processing unit that can be used in the noise current detector 100 according to the present invention.

In this example of a method for a noise current detector 100 according to the present invention, this is based on sequential implementation of the method steps. However, it is known that parallel processing of (some) steps is also possible, depending on the chosen embodiment of the noise current detector 100. A person skilled in the art will be familiar with the possibilities for this.

Method 500 for a processing unit 21 starts at step 505, in which initialisations are carried out.

In step 510 the processing unit 21 reads left and right measured ATC signals 56a, 56b that have been measured by the pick-up coils (60a, 60b; 61a, 61b) at the front of the train set 50 that is functional at that point in time.

In step 520 the processing unit determines the respective complex noise level RL, RR for each of the left and right measured ATC signals 56a, 56b.

In step 530 the processing unit determines the weighting factor A (where, preferably, $0 \leq A \leq 1$) at which the weighted average <R> of the complex noise levels RL, RR is minimum, for example by using <R> = |A·RL + B·RR|/(A+B) as calculation rule.

In step 540 the processing unit determines the first square-wave signal BS1 from the left measured ATC signal 56b and the second square-wave signal BS2 from the right measured ATC signal 56a.

In step 550 the processing unit determines the weighted average square-wave signal BS3 with the aid of the first and second square-wave signal BS1, BS2 and the weighting factor A determined in step according to BS3 = |A·BS2 + B·BS1|/(A+B), where, preferably, $0 \leq A \leq 1$ and B = 1-A corresponding to the calculation rule for averaging chosen in step.

Finally, in step 560 the processing unit determines which of the complex noise level values RL, RR and <R> is minimum. On the basis of this, the square-wave signal BS3 linked to said minimum noise level is selected as square-wave signal BSmin with least interference. Cases can arise where BS3 corresponds to BS1 or BS2 at the extreme values A = 0 and A = 1, respectively, where $0 \leq A \leq 1$.

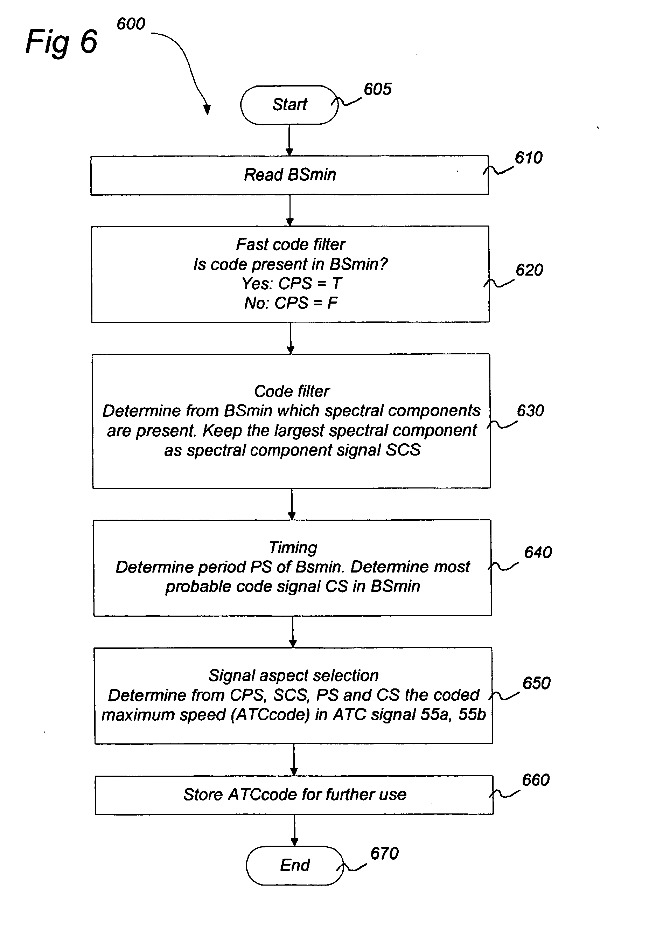

The method for the noise current detector 100 terminates in step 570. The value of the selected square-wave signal BSmin with least interference can be stored or fed to a subsequent method that performs more detailed analysis of BSmin. This will be explained in Figure 6 on the basis of a method for ATC detection.

Figure 6 shows a block diagram for a method 600 for a processing unit that can be used in the ATC detection system 200 according to the present invention.

This example of a method for an ATC detection system 200 according to the present invention is based on sequential execution of the method steps. However, it is known that parallel processing of (some) steps is also possible, depending on the embodiment of the ATC detection system 200 chosen. A person skilled in the art will be familiar with the possibilities for this.

The method starts in step 605. Initialisations and the like are possibly carried out here.

In step 610 the processing unit reads the selected square-wave signal BSmin with least interference.

In step 620 the processing unit executes a fast code filter on BSmin. If there is code in BSmin, a code presence signal CPS is set to the value 'true' (T); otherwise it is set to 'false' (F).

In step 630 the processing unit executes a code filter. The processing unit 21 determines from BSmin which spectral component are present and which is the largest. The largest value is stored as spectral component signal SCS.

In step 640 the processing unit 21 determines the period PS of BSmin by means of a timing procedure and determines what the most probable code signal CS is.

In step 650 the processing unit 21 determines what the coded maximum speed ATCcode in the (original) ATC signal 55a, 55b is in a signal aspect selection procedure.

In step 660 the processing unit 21 stores the value of ATCcode. This value can be further used in the ATC detection system for an indication of the maximum speed or for a control by means of that value.

Method 600 terminates in step 670.

Other alternatives and equivalent embodiments of the present invention are conceivable within the inventive concept, as will be clear to those skilled in the art. The inventive concept is restricted only by the appended claims.

**Claims**

1.  ATC detection system comprising at least a first pick-up coil (60a) and a second pick-up coil (60b) and a filter member; the at least first and second pick-up coils (60a, 60b) equipped for contact-free measurement of a first signal (55a) in a first rail (10a) comprising an information signal (C) amplitude-modulated on a carrier wave signal (F) and of a second signal (55b) in a second rail (10b) comprising the information signal (C) amplitude-modulated on a carrier wave signal (F), respectively; the filter member equipped for filtering out the information signal (C) from the information signal (C) amplitude-modulated on the carrier wave signal (F) in each of the first and second rails (10a, 10b),

**characterised in that**
the filter member (100) comprises a noise-determining member (120) that is equipped to:

- pick up a first measured signal (56a) from the first rail (10a) and a second measured signal (56b) from the second rail (10b);
- determine a first complex noise level value (RR) in the first measured signal (56a) and a second complex noise level value (RL) in the second measured signal (56b);
- on the basis of the first and second complex noise level values (RL, RR), determine a measured signal with least interference from the first and second measured signals (56a; 56b).

2.  ATC detection system according to Claim 1, wherein the noise-determining member (120) is furthermore equipped to establish a weighted average noise level value (<R>) for the first and second complex noise level values with associated weighting factor (A, B) and to determine a weighted average of the first measured signal (56a) and the second measured signal (56b) as the measured signal with least interference for a minimum value of the weighted average noise level value (<R>).

3.  ATC detection system according to Claim 1 or 2, wherein the filter member (100) furthermore comprises a carrier wave filter member (140) that is equipped to determine a first square-wave signal (BS1) and second square-wave signal (BS2) from the first and second measured signal (56a, 56b), respectively.

4.  ATC detection system according to Claim 3, wherein the carrier wave filter member is furthermore equipped to determine a weighted average square-wave signal (BS3) as the square-wave signal with least interference for the minimum value of the weighted average noise level value (<R>).

5.  ATC detection system according to Claim 3 or 4, wherein the carrier wave filter member makes the weighted average square-wave signal (BS3) available as output as square-wave signal (BSmin) with least interference.

6.  ATC detection system according to one of the preceding claims, wherein the noise-determining member (120) determines the complex noise level values in the measured signals (56a, 56b) outside the frequency range of the carrier wave signal (F).

7.  ATC detection system according to Claim 6, wherein a first filter array (130) is coupled to the noise-determining member (120), wherein the first filter array is provided with filter values by means of which the noise-determining member can determine the frequency range of the carrier wave signal (F).

8. ATC detection system according to one of the preceding Claims 3 to 5, wherein the carrier wave filter member (140) determines the first and second square-wave signals (BS1, BS2) from the measured signals (56a, 56b) within the frequency range of the carrier wave signal (F).

9. ATC detection system according to Claim 8, wherein a second filter array (150) is linked to the carrier wave filter member (140), wherein the second filter array (150) is provided with further filter values by means of which the carrier wave filter member can determine the frequency range of the carrier wave signal (F).

10. ATC detection system according to one of the preceding Claims 3 to 9, furthermore comprising a code filters member (210), a timing member (220), and a fast code filters member (230) and a signal aspect selection member (240), wherein the filter member (100) is connected by an output to an input of the code filters member (210), an input of the timing member (220) and an input of the fast code filters member (230) for feeding, in use, a square-wave signal (BSmin) with least interference to each input; wherein

the fast code filters member (230) is equipped to determine (CPS) whether the square-wave signal (BSmin) with least interference comprises an information signal (C);

the code filters member (210) is equipped to determine which spectral components signals the square-wave signal (BSmin) with least interference contains and which is the largest spectral component (SCS) of these;

the timing member (220) is equipped to determine a period (PS) and a most probable code signal (CS) from the square-wave signal (BSmin) with least interference.

11. ATC detection system according to Claim 10, wherein the code filters member (210), the timing member (220) and the fast code filters member (230) are each connected to the signal aspect selection member (240) and the signal aspect selection member (240) is equipped to determine, on the basis of the determinations (CPS, PS, CS, SCS) of the code filters member (210), the timing member (220) and the fast code filters member (230), what is the information signal (C) in the first signal (55a) and in the second signal (55b).

12. Method for an ATC detection system comprising at least a first pick-up coil (60a) and a second pick-up coil (60b) and a filter member; the at least first and second pick-up coils (60a, 60b) equipped for contact-free measurement of a first signal (55a) in a first rail (10a) comprising an information signal (C) amplitude-modulated on a carrier wave signal (F) and of a second signal (55b) in a second rail (10b) comprising the information signal (C) amplitude-modulated on a carrier wave signal (F), respectively; the filter member equipped for filtering out the information signal (C) from the information signal (C) amplitude-modulated on the carrier wave signal (F) in each of the first and second rails (10a, 10b), **characterised by** the step for noise determination, which comprises:

- picking up a first measured signal (56a) from the first rail (10a) and a second measured signal (56b) from the second rail (10b);
- determining a first complex noise level value (RR) in the first measured signal (56a) and a second complex noise level value (RL) in the second measured signal (56b);
- on the basis of the first and second complex noise level values (RR, RL), determining a measured signal with least interference from the first and second measured signals (56a, 56b).

13. Computer system for ATC detection, comprising at least a first pick-up coil (60a) and a second pick-up coil (60b) and a filter member; the at least first and second pick-up coils (60a, 60b) equipped for contact-free measurement of a first signal (55a) in a first rail (10a) comprising an information signal (C) amplitude-modulated on a carrier wave signal (F) and of a second signal (55b) in a second rail (10b) comprising the information signal (C) amplitude-modulated on a carrier wave signal (F), respectively; the computer system equipped for filtering out the information signal (C) from the information signal (C) amplitude-modulated on the carrier wave signal (F) in each of the first and second rails (55a, 55b), the computer system provided with a processing unit (21) and memory means (18, 19, 21, 22, 23), wherein the processing unit is connected to the memory means and to the pick-up coils, **characterised in that** the processing unit (21) is able to perform a noise determination step, the noise determination step comprising:

- picking up a first measured signal (56a) from the first rail (10a) and a second measured signal (56b) from the second rail (10b);
- determining a first complex noise level value (RR) in the first measured signal (56a) and a second complex noise level value (RL) in the second measured signal (56b);
- on the basis of the first and second complex noise level values (RL, RR), determining a measured signal with least interference from the first and second measured signals (56a; 56b).

14. Computer program product to be loaded by computer system for ATC detection according to Claim 13, **characterised in that**, after it has been loaded, the computer program product enables the processing unit (21) to perform a noise determination step, the noise determination step comprising:

- picking up a first measured signal (56a) from the first rail (10a) and a second measured signal (56b) from the second rail (10b);
- determining a first complex noise level value (RR) in the first measured signal (56a) and a second complex noise level value (RL) in the second measured signal (56b);
- on the basis of the first and second complex noise level values (RR, RL), determining a measured signal with least interference from the first and second measured signals (56a; 56b).

**Patentansprüche**

1. ATC-Detektionssystem, umfassend mindestens eine erste Sondenspule (60a) und eine zweite Sondenspule (60b) und ein Filterelement; wobei die mindestens erste und zweite Sondenspule (60a, 60b) ausgerüstet sind: zur berührungslosen Messung von einem ersten Signal (55a) in einer ersten Schiene (10a), das ein Informationssignal (C), das auf einem Trägerwellensignal (F) amplitudenmoduliert ist, umfasst, bzw. von einem zweiten Signal (55b) in einer zweiten Schiene (10b), das das Informationssignal (C), das auf einem Trägerwellensignal (F) amplitudenmoduliert ist, umfasst; wobei das Filterelement zum Herausfiltern des Informationssignals (C) aus dem auf dem Trägerwellensignal (F) amplitudenmodulierten Informationssignal (C) in jeder der ersten und zweiten Schiene (10a, 10b) ausgerüstet ist, **dadurch gekennzeichnet, dass** das Filterelement (100) ein Rauschbestimmungungselement (120) umfasst, das ausgerüstet ist, um:

- ein erstes Messsignal (56a) von der ersten Schiene (10a) und ein zweites Messsignal (56b) von der zweiten Schiene (10b) aufzunehmen;
- einen ersten komplexen Rauschpegelwert (RR) in dem ersten Messsignal (56a) und einen zweiten komplexen Rauschpegelwert (RL) in dem zweiten Messsignal (56b) zu bestimmen;
- ein Messsignal mit geringster Störung aus dem ersten und zweiten Messsignal (56a; 56b) auf der Grundlage des ersten und zweiten komplexen Rauschpegelwerts (RL, RR) zu bestimmen.

2. ATC-Detektionssystem nach Anspruch 1, bei dem das Rauschbestimmungselement (120) weiter ausgerüstet ist, um einen gewichteten Rauschpegelmittelwert (<R>) für den ersten und zweiten komplexen Rauschpegelwert mit einem zugeordneten Gewichtsfaktor (A, B) zu erstellen und um ein gewichtetes Mittel des ersten Messsignals (56a) und des zweiten Messsignals (56b) als das Messsignal mit geringster Störung für einen Minimalwert des gewichteten Rauschpegelmittelwerts (<R>) zu bestimmen.

3. ATC-Detektionssystem nach Anspruch 1 oder 2, bei dem das Filterelement (100) weiter ein Trägerwellenfilterelement (140) umfasst, das ausgerüstet ist, um ein erstes Rechtecksignal (BS1) und ein zweites Rechtecksignal (BS2) aus dem ersten bzw. zweiten Messsignal (56a, 56b) zu bestimmen.

4. ATC-Detektionssystem nach Anspruch 3, bei dem das Trägerwellenfilterelement weiter ausgerüstet ist, um ein Gewichtsmittel-Rechtecksignal (BS3) als das Rechtecksignal mit geringster Störung für den Minimalwert des gewichteten Rauschpegelmittelwerts (<R>) zu bestimmen.

5. ATC-Detektionssystem nach Anspruch 3 oder 4, bei dem das Trägerwellenfilterelement das Gewichtsmittel-Rechtecksignal (BS3) als Rechtecksignal (BSmin) mit geringster Störung als Ausgang verfügbar macht.

6. ATC-Detektionssystem nach einem der vorangehenden Ansprüche, bei dem das Rauschbestimmungselement (120) die komplexen Rauschpegelwerte in den Messsignalen (56a, 56b) außerhalb des Frequenzbereichs des Trägerwellensignals (F) bestimmt.

7. ATC-Detektionssystem nach Anspruch 6, bei dem ein erstes Filterarray (130) mit dem Rauschbestimmungselement (120) gekoppelt ist, wobei das erste Filterarray mit Filterwerten versehen ist, mittels derer das Rauschbestimmungselement den Frequenzbereich des Trägerwellensignals (F) bestimmen kann.

8. ATC-Detektionssystem nach einem der vorangehenden Ansprüche 3 bis 5, bei dem das Trägerwellenfilterelement (140) das erste und zweite Rechtecksignal (BS1, BS2) aus den Messsignalen (56a, 56b) in dem Frequenzbereich des Trägerwellensignals (F) bestimmt.

9. ATC-Detektionssystem nach Anspruch 8, bei dem ein zweites Filterarray (150) mit dem Trägerwellenfilterelement (140) verbunden ist, wobei das zweite Filterarray (150) mit weiteren Filterwerten versehen ist, mittels derer das Trägerwellenfilterelement den Frequenzbereich des Trägerwellensignals (F) bestimmen kann.

10. ATC-Detektionssystem nach einem der vorangehenden Ansprüche 3 bis 9, weiter umfassend ein Codefilterelement (210), ein Zeitglied (220) und ein schnelles Codefilterelement (230) und ein Signalanzeigeauswahlelement (240), wobei das Filterelement (100) durch einen Ausgang mit einem Eingang des Codefilterelements (210), einem Eingang des Zeitglieds (220) und einem Eingang des schnellen Codefilterelements (230) verbunden ist, um bei Gebrauch ein Rechtecksignal (BSmin) mit geringster Störung zu jedem Eingang zuzuführen; wobei das schnelle Codefilterelement (230) ausgerüstet ist, um zu bestimmen (CPS), ob das Rechtecksignal (BSmin) mit geringster Störung ein Informationssignal (C) umfasst; das Codefilterelement (210) ausgerüstet ist, um zu bestimmen, welche Spektralkomponentensignale das Rechtecksignal (BSmin) mit geringster Störung enthält und welches die größte Spektralkomponente (SCS) davon ist; das Zeitglied (220) ausgerüstet ist, um eine Periode (PS) und ein wahrscheinlichstes Codesignal (CS) aus dem Rechtecksignal (BSmin) mit geringster Störung zu bestimmen.

11. ATC-Detektionssystem nach Anspruch 10, bei dem das Codefilterelement (210), das Zeitglied (220) und das schnelle Codefilterelement (230) jeweils mit dem Signalanzeigeauswahlelement (240) verbunden sind und das Signalanzeigeauswahlelement (240) ausgerüstet ist, um auf der Grundlage der Bestimmungen (CPS, PS, CS, SCS) des Codefilterelements (210), des Zeitglieds (220) und des schnellen Codefilterelements (230) zu bestimmen, was das Informationssignal (C) in dem ersten Signal (55a) und in dem zweiten Signal (55b) ist.

12. Verfahren für ein ATC-Detektionssystem, umfassend mindestens eine erste Sondenspule (60a) und eine zweite Sondenspule (60b) und ein Filterelement; wobei die mindestens erste und zweite Sondenspule (60a, 60b) ausgerüstet sind: zur berührungslosen Messung von einem ersten Signal (55a) in einer ersten Schiene (10a), das ein Informationssignal (C), das auf einem Trägerwellensignal (F) amplitudenmoduliert ist, umfasst, bzw. von einem zweiten Signals (55b) in einer zweiten Schiene (10b), das das Informationssignal (C), das auf einem Trägerwellensignal (F) amplitudenmoduliert ist, umfasst; wobei das Filterelement zum Herausfiltern des Informationssignals (C) aus dem auf dem Trägerwellensignal (F) amplitudenmodulierten Informationssignal (C) in jeder der ersten und zweiten Schiene (10a, 10b) ausgerüstet ist, **gekennzeichnet durch** den Schritt zur Rauschbestimmung, der umfasst:

- Aufnehmen eines erstes Messsignals (56a) von der ersten Schiene (10a) und eines zweiten Messsignals (56b) von der zweiten Schiene (10b);
- Bestimmen eines ersten komplexen Rauschpegelwerts (RR) in dem ersten Messsignal (56a) und eines zweiten komplexen Rauschpegelwerts (RL) in dem zweiten Messsignal (56b);
- Bestimmen eines Messsignals mit geringster Störung aus dem ersten und zweiten Messsignal (56a, 56b) auf der Grundlage des ersten und zweiten komplexen Rauschpegelwerts (RR, RL).

13. Computersystem zur ATC-Detektion, umfassend mindestens eine erste Sondenspule (60a) und eine zweite Sondenspule (60b) und ein Filterelement; wobei die mindestens erste und zweite Sondenspule (60a, 60b) ausgerüstet sind: zur berührungslosen Messung von einem ersten Signal (55a) in einer ersten Schiene (10a), das ein Informationssignal (C), das auf einem Trägerwellensignal (F) amplitudenmoduliert ist, umfasst, bzw. von einem zweiten Signal (55b) in einer zweiten Schiene (10b), das das Informationssignal (C), das auf einem Trägerwellensignal (F) amplitudenmoduliert ist, umfasst; wobei das Computersystem zum Herausfiltern des Informationssignals (C) aus dem auf dem Trägerwellensignal (F) amplitudenmodulierten Informationssignal (C) in jeder der ersten und zweiten Schiene (55a, 55b) ausgerüstet ist, wobei das Computersystem mit einem Zentralprozessor (21) und Speichereinrichtungen (18, 19, 21, 22, 23) versehen ist, wobei der Zentralprozessor mit den Speichereinrichtungen und mit den Sondenspulen verbunden ist, **dadurch gekennzeichnet, dass** der Zentralprozessor (21) einen Rauschbestimmungsschritt ausführen kann, wobei der Rauschbestimmungsschritt umfasst:

- Aufnehmen eines erstes Messsignals (56a) von der ersten Schiene (10a) und eines zweiten Messsignals (56b) von der zweiten Schiene (10b);
- Bestimmen eines ersten komplexen Rauschpegelwerts (RR) in dem ersten Messsignal (56a) und eines zweiten komplexen Rauschpegelwerts (RL) in dem zweiten Messsignal (56b);
- Bestimmen eines Messsignals mit geringster Störung aus dem ersten und zweiten Messsignal (56a; 56b) auf der Grundlage des ersten und zweiten komplexen Rauschpegelwerts (RL, RR).

14. Computerprogrammprodukt, das durch ein Computersystem zur ATC-Detektion nach Anspruch 13 zu laden ist, **dadurch gekennzeichnet, dass**, nachdem es geladen worden ist, das Computerprogrammprodukt den Zentralprozessor (21) befähigt, einen Rauschbestimmungsschritt auszuführen, wobei der Rauschbestimmungsschritt umfasst:

- Aufnehmen eines erstes Messsignals (56a) von der ersten Schiene (10a) und eines zweiten Messsignals (56b) von der zweiten Schiene (10b);
- Bestimmen eines ersten komplexen Rauschpegelwerts (RR) in dem ersten Messsignal (56a) und eines zweiten komplexen Rauschpegelwerts (RL) in dem zweiten Messsignal (56b);
- Bestimmen eines Messsignals mit geringster Störung aus dem ersten und zweiten Messsignal (56a; 56b) auf der Grundlage des ersten und zweiten komplexen Rauschpegelwerts (RR, RL).

**Revendications**

1. Système de détection de commande automatique de train (ATC) comprenant au moins une première bobine de captage (60a) et une seconde bobine de captage (60b) et un organe filtrant ; les au moins première et seconde bobines de captage (60a, 60b) étant équipées pour une mesure dépourvue de contact d'un premier signal (55a) dans un premier rail (10a) comprenant un signal d'information (C) modulé en amplitude sur un signal d'onde porteuse (F) et d'un second signal (55b) dans un second rail (10b) comprenant le signal d'information (C) modulé en amplitude sur un signal d'onde porteuse (F), respectivement ; l'organe filtrant étant équipé pour filtrer le signal d'information (C) à partir du signal d'information (C) modulé en amplitude sur le signal d'onde porteuse (F) dans chacun des premier et second rails (10a, 10b), **caractérisé en ce que** l'organe filtrant (100) comprend un organe de détermination de bruit (120) qui est équipé pour :

- capter un premier signal mesuré (56a) à partir du premier rail (10a) et un second signal mesuré (56b) à partir du second rail (10b) ;
- déterminer une première valeur de niveau de bruit complexe (RR) dans le premier signal mesuré (56a) et une seconde valeur de niveau de bruit complexe (RL) dans le second signal mesuré (56b) ;
- sur la base des première et seconde valeurs de niveau de bruit complexe (RR, RL), déterminer un signal mesuré avec moins d'interférence à partir des premier et second signaux mesurés (56a ; 56b).

2. Système de détection ATC selon la revendication 1, dans lequel l'organe de détermination de bruit (120) est de plus équipé pour établir une valeur de niveau de bruit moyenne pondérée (<R>) pour les première et seconde valeurs de niveau de bruit complexe avec un facteur de pondération associé (A, B) et pour déterminer une moyenne pondérée du premier signal mesuré (56a) et du second signal mesuré (56b) en tant que signal mesuré avec moins d'interférence pour une valeur minimale de la valeur de niveau de bruit moyenne pondérée (<R>).

3. Système de détection ATC selon la revendication 1 ou 2, dans lequel l'organe filtrant (100) comprend en outre un organe filtrant d'onde porteuse (140) qui est équipé pour déterminer un premier signal d'onde carrée (BS1) et un second signal d'onde carrée (BS2) à partir des premier et second signaux mesurés (56a, 56b), respectivement.

4. Système de détection ATC selon la revendication 3, dans lequel l'organe filtrant d'onde porteuse est de plus équipé pour déterminer un signal d'onde carrée moyenne pondérée (BS3) comme le signal d'onde carrée avec moins d'interférence pour la valeur minimale de la valeur de niveau de bruit moyenne pondérée (<R>).

5. Système de détection ATC selon la revendication 3 ou 4, dans lequel l'organe filtrant d'onde porteuse rend le signal d'onde carrée moyenne pondérée (BS3) disponible comme sortie en tant que signal d'onde carrée (BSmin) avec moins d'interférence.

6. Système de détection ATC selon l'une quelconque des revendications précédentes, dans lequel l'organe de détermination de bruit (120) détermine les valeurs de niveau de bruit complexe dans les signaux mesurés (56a, 56b) à l'extérieur de la gamme de fréquence du signal d'onde porteuse (F).

7. Système de détection ATC selon la revendication 6, dans lequel un premier réseau de filtre (130) est couplé à l'organe de détermination de bruit (120), dans lequel le premier réseau de filtre est pourvu de valeurs de filtre au moyen desquelles l'organe de détermination de bruit peut déterminer la gamme de fréquence du signal d' onde porteuse (F).

8. Système de détection ATC selon l'une quelconque des revendications 3 à 5, dans lequel l'organe filtrant d'onde porteuse (140) détermine les premier et second signaux d'onde carrée (BS1, BS2) à partir des signaux mesurés (56a, 56b) dans la gamme de fréquence du signal d'onde porteuse (F) .

9. Système de détection ATC selon la revendication 8, dans lequel un second réseau de filtre (150) est lié à l'organe filtrant d'onde porteuse (140), dans lequel le second réseau de filtre (150) est pourvu de valeurs de filtre supplémentaires au moyen desquelles l'organe filtrant d'onde porteuse peut déterminer la gamme de fréquence du signal d'onde porteuse (F).

10. Système de détection ATC selon l'une quelconque des revendications 3 à 9, comprenant en outre un organe filtrant de code (210), un organe de minutage (220) et un organe filtrant de code rapide (230) et un organe de sélection d'aspect de signal (240), dans lequel l'organe filtrant (100) est connecté par une sortie à une entrée de l'organe filtrant de code (210), une entrée de l'organe de minutage (220) et une entrée de l'organe filtrant de code rapide (230) pour délivrer, en utilisant, un signal d'onde carrée (BSmin) avec moins d'interférence à chaque entrée ; dans lequel

l'organe filtrant de code rapide (230) est équipé pour déterminer (CPS) si le signal d'onde carrée (BSmin) avec moins d'interférence comprend un signal d'information (C) ;

l'organe filtrant de code (210) est équipé pour déterminer quels signaux de composantes spectrales le signal d'onde carrée (BSmin) avec moins d'interférence contient et quelle est la plus grande composante spectrale (SCS) de ceux-ci ;

l'organe de minutage (220) est équipé pour déterminer une période (PS) et un signal de code le plus probable (CS) à partir du signal d'onde carrée (BSmin) avec moins d'interférence.

11. Système de détection ATC selon la revendication 10, dans lequel l'organe filtrant de code (210), l'organe de minutage (220) et l'organe filtrant de code rapide (230) sont chacun connectés à l'organe de sélection d'aspect de signal (240) et l'organe de sélection d'aspect de signal (240) est équipé pour déterminer, sur la base des déterminations (CPS, PS, CS, SCS) de l'organe filtrant de code (210), l'organe de minutage (220) et l'organe filtrant de code rapide (230), quel est le signal d'information (C) dans le premier signal (55a) et dans le second signal (55b).

12. Procédé pour un système de détection ATC comprenant au moins une première bobine de captage (60a) et une seconde bobine de captage (60b) et un organe filtrant ; les au moins première et seconde bobines de captage (60a, 60b) étant équipées pour une mesure dépourvue de contact d'un premier signal (55a) dans un premier rail (10a) comprenant un signal d'information (C) modulé en amplitude sur un signal d'onde porteuse (F) et d'un second signal (55b) dans un second rail (10b) comprenant le signal d'information (C) modulé en amplitude sur un signal d'onde porteuse (F), respectivement ; l'organe filtrant étant équipé pour filtrer le signal d'information (C) à partir du signal d'information (C) modulé en amplitude sur le signal d'onde porteuse (F) dans chacun des premier et second rails (10a, 10b), **caractérisé par** l'étape de détermination de bruit, qui comprend les sous-étapes consistant à :

- capter un premier signal mesuré (56a) à partir du premier rail (10a) et un second signal mesuré (56b) à partir du second rail (10b) ;
- déterminer une première valeur de niveau de bruit complexe (RR) dans le premier signal mesuré (56a) et une seconde valeur de niveau de bruit complexe (RL) dans le second signal mesuré (56b) ;
- sur la base des première et seconde valeurs de niveau de bruit complexe (RR, RL), déterminer un signal mesuré avec moins d'interférence à partir des premier et second signaux mesurés (56a ; 56b).

13. Système informatique pour la détection ATC, comprenant au moins une première bobine de captage (60a) et une seconde bobine de captage (60b) et un organe filtrant ; les au moins première et seconde bobines de captage (60a, 60b) étant équipées pour une mesure dépourvue de contact d'un premier signal (55a) dans un premier rail (10a) comprenant un signal d'information (C) modulé en amplitude sur un signal d'onde porteuse (F) et d'un second signal (55b) dans un second rail (10b) comprenant le signal d'information (C) modulé en amplitude sur un signal d'onde porteuse (F), respectivement ; le système informatique étant équipé pour filtrer le signal d'information (C) à partir du signal d'information (C) modulé en amplitude sur le signal d'onde porteuse (F) dans chacun des premier et second rails (55a, 55b), le système informatique étant pourvu d'une unité de traitement (21) et de moyens de mémoire (18, 19, 21, 22, 23), dans lequel l'unité de traitement est connectée aux moyens de mémoire et aux bobines de captage, **caractérisé en ce que** l'unité de traitement (21) est capable d'effectuer une étape de détermination de bruit, l'étape de détermination de bruit comprenant les sous-étapes consistant à :

- capter un premier signal mesuré (56a) à partir du premier rail (10a) et un second signal mesuré (56b) à partir du second rail (10b) ;
- déterminer une première valeur de niveau de bruit complexe (RR) dans le premier signal mesuré (56a) et une seconde valeur de niveau de bruit complexe (RL) dans le second signal mesuré (56b) ;
- sur la base des première et seconde valeurs de niveau de bruit complexe (RR, RL), déterminer un signal mesuré avec moins d'interférence à partir des premier et second signaux mesurés (56a ; 56b).

14. Produit de programme informatique à charger par un système informatique pour la détection ATC selon la revendication 13, **caractérisé en ce que**, après qu'il a été chargé, le produit de programme informatique permet à l'unité de traitement (21) d'effectuer une étape de détermination de bruit, l'étape de détermination de bruit comprenant les sous-étapes consistant à :

- capter un premier signal mesuré (56a) à partir du premier rail (10a) et un second signal mesuré (56b) à partir du second rail (10b) ;
- déterminer une première valeur de niveau de bruit complexe (RR) dans le premier signal mesuré (56a) et une seconde valeur de niveau de bruit complexe (RL) dans le second signal mesuré (56b) ;
- sur la base des première et seconde valeurs de niveau de bruit complexe (RR, RL), déterminer un signal mesuré avec moins d'interférence à partir des premier et second signaux mesurés (56a ; 56b).

Fig 1

EP 1 619 103 B1

# Fig 2

FA1 1x800 array — 130

60a,60b

R
L

R
L

61a,61b

direction of travel

110

Coil-selection
n

55a

55b

120

Noise-deter-mination
n

140

75 Hz filtering

150

FA2 1x800 array

160
165

$R_R$

A=0.5

<R>

RL

BS2

'A'

BS1

170   175

BS3

180

Coil-signal-selection
n

BS min

100

# Fig 3

60a,60b

R
L

R
L

61a,61b

direction of travel

100

75 Hz filter

BS min

210

Code filters

SCS

220

Timing

PS

CS

230

Fast code filters

CPS

240

200

Signal aspect selection

ATC code

# Fig 4

*Fig 5*

500

( Start ) 505

Read ATC signals 55a, 55b from the pick-up coils 60, 61 at the desired end of the train set 50    510

Determine noise level RR and RL in right and left ATC signals    520

Determine the value of weighting factor A for which the weighted average noise level <R> is minimum    530

Filter ATC signals 55a, 55b to give first and second square-wave signals BS1, BS2    540

Determine weighted average square-wave signal BS3 with the aid of weighting factor A    550

Determine which is minimum of values RR, RL and <R>. Take associated square-wave signal (BS1; BS2; BS3) as square-wave signal BSmin with least interference    560

( end ) 570

**Fig 6** 600

Start 605

Read BSmin 610

Fast code filter
Is code present in BSmin?
Yes: CPS = T
No: CPS = F
620

Code filter
Determine from BSmin which spectral components
are present. Keep the largest spectral component
as spectral component signal SCS
630

Timing
Determine period PS of Bsmin. Determine most
probable code signal CS in BSmin
640

Signal aspect selection
Determine from CPS, SCS, PS and CS the coded
maximum speed (ATCcode) in ATC signal 55a, 55b
650

Store ATCcode for further use 660

End 670

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0750402 A
- US 5586736 A